# EUROPÄISCHE PATENTSCHRIFT

(11) **EP 2 528 048 B1**
(45) Veröffentlichungstag und Bekanntmachung des Hinweises auf die Patenterteilung: **14.12.2016**
(21) Anmeldenummer: 12168862.6
(22) Anmeldetag: 22.05.2012
(51) Int. Cl.: G08G 1/04, G06T 7/00, H04N 7/18, G01C 9/06, G01S 7/40, G01S 17/88, G01S 7/497, G01S 13/91

(54) **Verfahren zur Ausrichtung und Kontrolle der Ausrichtung eines Verkehrsüberwachungsgerätes**
Method for aligning and controlling the alignment of a traffic monitoring device
Procédé d'alignement et de contrôle de l'alignement d'un appareil de surveillance du trafic

(30) Priorität: 26.05.2011 DE 102011050659
(43) Veröffentlichungstag der Anmeldung: 28.11.2012
(73) Patentinhaber: JENOPTIK Robot GmbH, 40789 Monheim am Rhein (DE)
(72) Erfinder: Lehning, Dr. Michael, 31137 Hildesheim (DE)
(74) Vertreter: Schaller, Renate

(56) Entgegenhaltungen:
- EP-A1- 1 873 716
- WO-A1-2009/076182
- GB-A- 2 392 766
- DAILEY D J ET AL: "Dynamic camera calibration of roadside traffic management cameras for vehicle speed estimation", IEEE TRANSACTIONS ON INTELLIGENT TRANSPORTATION SYSTEMS, IEEE, PISCATAWAY, NJ, USA, Bd. 4, Nr. 2, 1. Juni 2003 (2003-06-01), Seiten 90-98, XP011104438, ISSN: 1524-9050, DOI: 10.1109/TITS.2003.821213

## Beschreibung

In der Verkehrsüberwachung kommen Verkehrsüberwachungsgeräte (VÜG) zum Einsatz, die zur Fahrbahn ausgerichtet werden müssen, um definierte Messbedingungen zu schaffen. Insbesondere wenn es sich um mobile VÜGs handelt, kommt es darauf an, dass das Einrichten nur einen geringen Zeitaufwand erfordert. Schwierig ist dabei insbesondere, das VÜG so einzurichten, dass die Messachse bzw. die Messebene ohne Winkelverkippung zur Fahrbahn aufgestellt wird.

Ein VÜG umfasst insbesondere einen Messsensor. Dabei kann es sich z. B. um eine Videokamera, einen Laserscanner oder einen Radar-Sensor handeln.

Eine Videokamera wird in Abhängigkeit davon, ob sie seitlich oder oberhalb der Fahrbahn angeordnet wird, so ausgerichtet, dass ihre Kameraachse einen vorgegebenen vertikalen Winkel mit der Fahrbahnoberfläche, die als eine horizontale Ebene angenommen wird, einschließt. Dieser Winkel kann auch 0° sein, womit die Empfängermatrix der Kamera, auf der die Kameraachse senkrecht steht, senkrecht zur Fahrbahnoberfläche verläuft und nicht zu dieser geneigt ist. Des Weiteren darf die Empfängermatrix nicht gegenüber der Fahrbahnoberfläche verdreht sein, das heißt, die Zeilen der Empfängerfläche müssen auf einer Linie parallel zur Fahrbahnoberfläche verlaufen. Eine Videokamera so einzurichten, dass die Empfängermatrix und damit die Videokamera unter einem vorgegebenen Winkel bzw. nicht zur Fahrbahnoberfläche geneigt und nicht zur Fahrbahnoberfläche verdreht angeordnet ist, ist eine Möglichkeit zur Anwendung des erfindungsgemäßen Verfahrens.

Auch ein Radar-Sensor wird in Abhängigkeit davon, ob er seitlich oder oberhalb der Fahrbahn angeordnet wird, so ausgerichtet, dass seine Radarachse einen vorgegebenen vertikalen Winkel mit der Fahrbahnoberfläche einschließt, der bei seitlicher Aufstellung üblicherweise 0° beträgt. Einen Radar-Sensor so einzurichten, dass die Radarachse unter einem vorgegebenen Winkel, der auch 0° betragen kann, zur Fahrbahnoberfläche geneigt ist, soll eine weitere Möglichkeit zur Anwendung des erfindungsgemäßen Verfahrens sein.

Die Ausrichtung der Kameraachse einer Videokamera oder der Radarachse eines Radarsensors in horizontaler Richtung zur Fahrtrichtung bzw. zum Fahrbahnrand ist nicht Gegenstand des Verfahrens.

Ein Laserscanner mit einem Messbereich von 180° oder größer wird regelmäßig so neben der Fahrbahn positioniert, dass seine Mittelachse mit der Fahrtrichtung einen horizontalen Winkel von 90° und einen vertikalen Winkel von 0° einschließt, womit die Scanebene parallel zur Fahrbahnoberfläche verläuft. Bei einer Anordnung oberhalb der Fahrbahn sind die Winkelverhältnisse umgekehrt, d. h. die Scanebene verläuft senkrecht zur Fahrbahnoberfläche ausgerichtet. Einen Laserscanner so einzurichten, dass seine Scanebene parallel zur Fahrbahnoberfläche verläuft, ist ebenfalls eine Möglichkeit zur Anwendung des erfindungsgemäßen Verfahrens.

Die Möglichkeit einer korrekten Ausrichtung der VÜGs vor Beginn der Verkehrsüberwachung und eine wiederholbare Kontrolle der vorgenommenen Ausrichtung einschließlich einer eventuellen Korrektur einer Dejustierung sind Voraussetzungen für die Zulassung solcher VÜGs.

Eine Vorrichtung und ein Verfahren zur Verkehrsüberwachung sind in der Offenlegungsschrift WO 2009 076 182 A1 beschrieben. Zur Erfassung von sich auf einer Fahrbahn bewegenden Fahrzeugen weist die Vorrichtung eine Kamera auf. In den von der Kamera aufgenommenen Bildern werden mittels bekannter Verfahren Merkmale oder Muster der Fahrzeuge erfasst, die innerhalb einer aufgenommenen Bildfolge verfolgt werden können. Anhand der Bewegung im Verlauf der Bildfolge können erfasste Merkmale oder Muster einzelnen Fahrzeugen zugeordnet werden und kann eine 3D-Position der Fahrzeuge im Erfassungsbereich der Kamera ermittelt werden. Die Kalibrierung der Kamera zum 3D-Raum erfolgt über eine manuelle Festlegung einer x- und y-Achse in den Bildern der Kamera. Die x-Achse orientiert sich an waagerecht verlaufenden Strukturen der Fahrzeuge (z. B. Übergang zwischen Frontscheibe und Dach) und die y-Achse an der Richtung des Verkehrs entlang der Fahrbahn. Die z-Achse steht senkrecht auf der Fahrbahnebene. Eine Dimensionierung des 3D-Raums erfolgt anhand bekannter Abmessungen im Erfassungsbereich. In einer Ausführung wird auch eine automatische Kalibrierung der Kamera zum 3D-Raum beschrieben, jedoch ist hier mindestens eine ebene Fahrbahn und eine horizontal ausgerichtete Kamera Voraussetzung.

Der Erfindung liegt die Aufgabe zugrunde, ein alternatives Verfahren zu finden, mit dem ein VÜG zur Fahrbahnoberfläche ausgerichtet werden kann.

Dabei soll die Kamera als in Längsrichtung der Fahrbahn ausgerichtet gelten, wenn die Empfängermatrix der Kamera, auf der die Kameraachse senkrecht steht, senkrecht zur Fahrbahnoberfläche verläuft und nicht zu dieser geneigt ist. Die Kamera soll als in Querrichtung der Fahrbahn ausgerichtet gelten, wenn die Empfängermatrix nicht gegenüber der Fahrbahnoberfläche verdreht ist, das heißt, die Zeilen der Empfängerfläche müssen auf einer Linie parallel zur Fahrbahnoberfläche verlaufen.

Diese Aufgabe wird mit einem Verfahren zur Ausrichtung und Kontrolle der Ausrichtung eines Verkehrsüberwachungsgerätes (VÜG) mit einem Messsensor und einer hierzu fest angeordneten Kamera gelöst, indem das VÜG und damit die Kamera zur Fahrbahn positioniert und mit Augenmaß so ausgerichtet wird, dass die Neigung der Kamera zur Fahrbahnoberfläche möglichst gering ist, anschließend mehrere aufeinanderfolgende Abbildungen eines den Objektbereich der Kamera durchfahrenden Fahrzeuges erstellt werden, aus mindestens zwei Abbildungen die Lage einer Ist-Horizontlinie H_{L ist} errechnet und diese in nachfolgende Abbildungen projiziert wird, wobei die Kamera solange verkippt wird, bis in den nachfolgenden Abbildungen die projizierte Ist-Horizontlinie H_{L ist} entsprechend einer vorgegebenen Soll-Horizontlinie H_{L soll} verläuft, womit die Kamera zur Fahrbahnoberfläche ausgerichtet ist.Dabei wird die Ist-Horizontlinie H_{L ist} errechnet, indem der Fluchtpunkt P_{F} von in der Fahrtrichtung R_{F} verlaufenden, aus wenigstens zwei Abbildungen gebildeten Geraden sowie der Fluchtpunkt P_{Q} von in einer hierzu senkrechten Querrichtung R_{Q} verlaufenden, aus wenigstens einer Abbildung gebildeten Geraden ermittelt und die Fluchtpunkte P_{F} und P_{Q} miteinander durch eine Gerade verbunden werden, welche die Ist-Horizontlinie H_{L ist} präsentiert.

Zur Bildung von in Fahrtrichtung verlaufenden Geraden werden vorteilhaft ausgewählte Punkte an einem abgebildeten Fahrzeug in wenigstens zwei zeitlich aufeinanderfolgend erstellten Abbildungen miteinander verbunden und zur Bildung von in Querrichtung verlaufenden Geraden werden vorteilhaft wenigstens zwei ausgewählte Punkte in einer Abbildung, die sich in gleicher Höhe an einem abgebildeten Fahrzeug befinden, miteinander verbunden.

Das Verkippen der Kamera mittels eines am VÜG vorhandenen Verkippmechanismus kann manuell eingeleitet erfolgen, während der Bediener die Lageänderung der Ist- Horizontlinie in der Abbildung visuell an einem Display, auf dem die Abbildungen dargestellt werden, verfolgt.

Alternativ hierzu kann das Verkippen der Kamera mittels eines am VÜG vorhandenen Verkippmechanismus automatisch eingeleitet erfolgen, indem die Lageänderung der Ist-Horizontlinie rechentechnisch erfasst wird und Abweichungen von der Soll-Horizontlinie als Regelgröße für motorische Antriebe des Verkippmechanismus genutzt werden.

Es ist von Vorteil, wenn erst die Kamera um ihre Kameraachse gedreht wird, bis die Ist-Horizontlinie zur Soll-Horizontlinie parallel ausgerichtet ist, und anschließend die Kameraachse und damit die Kamera vertikal verkippt wird, wobei die Ist-Horizontlinie zur Soll-Horizontlinie hin verschoben wird, bis sie mit ihr zur Deckung kommt.

Um das erfindungsgemäße Verfahren durchführen zu können, muss das VÜG eine Kamera umfassen.

Dabei kann es sich um eine Kamera handeln, die selbst den Messsensor des VGÜ darstellt, die das VÜG zusätzlich zu einem Messsensor zur Dokumentation von Messsituationen aufweist oder die ausschließlich zum Zwecke der Ausrichtung des VÜG an diesem vorgesehen ist.

Erfindungsgemäß wird der Messsensor ausgerichtet, indem die mit ihm fest verbundene Kamera ausgerichtet wird. Das heißt, der Messsensor und die Kamera werden vorzugsweise bereits werksseitig so zueinander justiert, dass der Messsensor zur Fahrbahn bestimmungsgemäß ausgerichtet ist, wenn die Kamera ausgerichtet ist. Sie gilt dann als ausgerichtet, wenn deren Empfängermatrix, die in der Bildebene des Kameraobjektives steht, senkrecht zur Fahrbahnoberfläche steht und deren Zeilen parallel zur Fahrbahnoberfläche verlaufen, womit die Kamera zur Fahrbahnoberfläche weder geneigt noch gegenüber dieser verdreht angeordnet ist.

Wenn die Kameraachse in Fahrtrichtung ausgerichtet ist, dann ist eine Neigung der Empfängermatrix zur Fahrbahnoberfläche als Neigung in Fahrtrichtung und eine Verkippung deren Zeilen als Neigung in Querrichtung zu verstehen.

Erfindungsgemäß erfolgt die Ausrichtung, indem aus mindestens zwei aufeinanderfolgenden Abbildungen eines den Objektbereich der Kamera durchfahrenden Fahrzeuges die Lage einer Ist-Horizontlinie H_{L ist} ermittelt wird, diese in die Abbildung projiziert und die Kamera anschließend verkippt wird, währenddessen aus weiteren Abbildungen die Ist-Horizontlinie H_{L ist} wiederholt neu berechnet und projiziert wird, bis in einer nachfolgenden Abbildung die projizierte Ist-Horizontlinie H_{L ist} parallel zur Bildkante in Zeilenrichtung, die Abbildung halbierend, entsprechend der Lage einer Soll-Horizontlinie H_{L soll} verläuft. Erfolgt die Justierung unter visueller Beobachtung der Lageänderung der Ist-Horizontlinie ist es von Vorteil, wenn in die Abbildung eine Soll-Horizontlinie eingeblendet wird, auf die die Ist-Horizontlinie zur Deckung gebracht wird.

Die Abbildungen und folglich die Projektion der Horizontlinien in die Abbildungen müssen nicht zur Anzeige gebracht werden, sondern die Justierung kann auch allein durch rechentechnische Verarbeitung von als Abbildungen zu verstehenden Bilddateien und eine davon abhängige Ansteuerung eines Verkippmechanismus erfolgen.

Anhand der Zeichnungen wird das Verfahren im Folgenden an einem Ausführungsbeispiel näher erläutert.

Es zeigen:
- Fig. 1: Prinzipskizze zur Ermittlung der Ist-Horizontlinie,
- Fig. 2a: zwei überblendete Abbildungen, erstellt mit einer Kamera, die um die x- und die z-Achse verkippt ist,
- Fig. 2b: zwei überblendete Abbildungen, erstellt mit einer Kamera, die nur um die x-Achse verkippt ist,
- Fig. 2c: zwei überblendete Abbildungen, erstellt mit einer Kamera, die korrekt ausgerichtet ist,
- Fig. 3a: drei Abbildungen zur Erläuterung einer vorteilhaften Kontrolle der korrekten Ausrichtung der Kamera und
- Fig.3b: eine Abbildung zur Erläuterung einer weiteren vorteilhaften Kontrolle der korrekten Ausrichtung der Kamera.

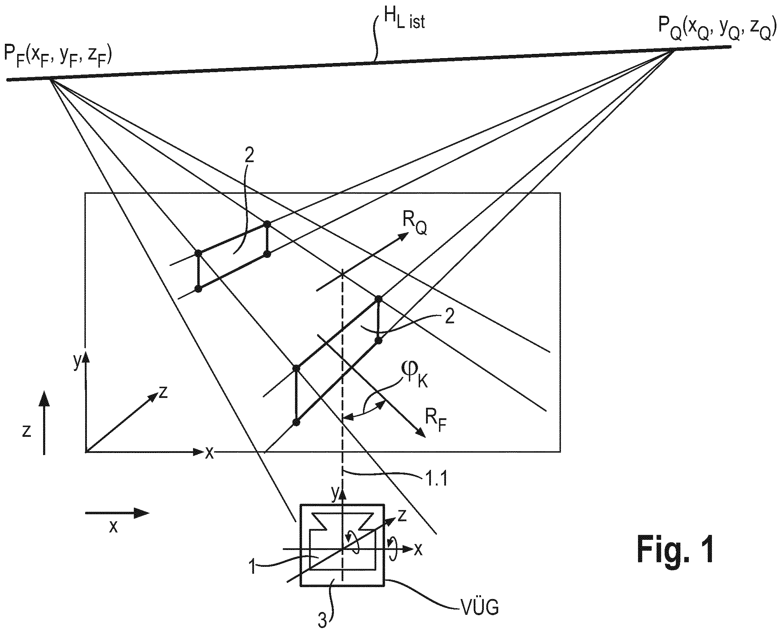

Mit dem erfindungsgemäßen Verfahren soll ein VÜG, genauer dessen Messsensor 3 zur Fahrbahnoberfläche ausgerichtet werden. Zu diesem Zweck ist das VÜG mit einer Kamera 1 ausgestattet, die fest mit dem Messsensor 3 verbunden ist, sofern der Messsensor 3 nicht selbst eine Kamera 1 ist.
Zur Erläuterung eines Ausführungsbeispiels ist in Fig. 1 eine Prinzipskizze gezeigt, in der von einem den Objektbereich einer Kamera 1 durchfahrenden Fahrzeug das vordere Fahrzeugkennzeichen 2 in zwei zeitlich nacheinander erstellten Abbildungen gezeigt ist. Dabei ist das VÜG und damit die Kamera 1 so zur Fahrbahn positioniert, dass die Kameraachse 1.1 horizontal betrachtet einen vorgegebenen Kamerawinkel φ_{K}, z. B. von 20°, mit der Fahrtrichtung R_{F} einschließt und mit Augenmaß so ausgerichtet ist, dass ihre Neigung zur Fahrbahnoberfläche möglichst gering ist.
Es werden jetzt von einem den Objektbereich der Kamera 1 durchfahrenden Fahrzeug zeitlich nacheinander mehrere Abbildungen erstellt, mit Hilfe derer die Lage der Ist-Horizontlinie H_{L ist} ermittelt wird.
Die Ist-Horizontlinie H_{L ist} wird errechnet, indem der Fluchtpunkt P_{F} von in der Fahrtrichtung R_{F} verlaufenden, aus wenigstens zwei Abbildungen gebildeten Geraden sowie der Fluchtpunkt P_{Q} von in einer hierzu senkrechten Querrichtung R_{Q} verlaufenden, aus wenigstens einer Abbildung gebildeten Geraden ermittelt und die Fluchtpunkte P_{F} und P_{Q} miteinander durch eine Gerade verbunden werden, welche die Ist-Horizontlinie H_{L ist} präsentiert.
Die Ist-Horizontlinie H_{L ist} präsentiert die reale Lage der Horizontlinie. Sie verläuft nur dann mittig durch und parallel zu den Längskanten einer Abbildung eines Objektfeldes, wenn die Kamera 1 nicht zur Fahrbahn geneigt oder gegenüber der Fahrbahn verdreht ist.
Eine mittig und parallel zu den Längskanten einer Abbildung verlaufende Linie soll als Soll-Horizontlinie H_{L soll} verstanden werden. Sie präsentiert die reale Lage der Horizontlinie in der Abbildung, wenn die Kamera 1 korrekt ausgerichtet ist.

Die genannten Geraden verlaufen in einem Bereich, der die x-z-Ebene einschließt, die sich senkrecht zur Zeichenebene erstreckt. Für eine anschauliche Erläuterung wurde diese in Fig. 1 in die Zeichenebene projiziert, in der gleichzeitig der Rahmen einer Abbildung in der x-y-Ebene dargestellt ist.

Um Geraden zu bilden, die in Fahrtrichtung R_{F} verlaufen, können theoretisch die Bilder eines beliebig ausgewählten Punktes an einem Fahrzeug in wenigstens zwei zeitlich aufeinanderfolgend erstellten Abbildungen miteinander verbunden werden.

Um Geraden zu bilden, die in Querrichtung R_{Q} verlaufen, können zwei oder mehr ausgewählte Punkte in einer Abbildung, die sich in gleicher Höhe an einem Fahrzeug befinden, miteinander verbunden werden. Gleiches kann mit Punkten einer weiteren Abbildung erfolgen, um die Lage des ermittelten Fluchtpunktes zu präzisieren.
Praktisch wird man hierzu Punkte verwenden mit einer typischen und hohen Reflektivität bzw. Strahlungsintensität, z. B. von Kennzeichen oder Scheinwerfern.
Je mehr Geraden gebildet werden, desto genauer können aus der Vielzahl der entstehenden Schnittpunkte die Fluchtpunkte P_{F} und P_{Q} errechnet werden. Wege zur Errechnung der beiden Fluchtpunkte P_{F} und P_{Q}, bezogen auf ein rechtwinkliges x-y-z-Koordinatensystem, welches durch die Zeilen und Spalten der Empfängermatrix der Kamera 1 definiert ist, sind dem Fachmann bekannt und sind nicht Gegenstand der Erfindung.

Durch die beiden Fluchtpunkte P_{F} und P_{Q} wird nun eine Gerade gelegt. Diese repräsentiert die Ist-Horizontlinie H_{L ist} und wird in nachfolgend erzeugte Abbildungen eingeblendet.
Aus der Lage der eingeblendeten Ist-Horizontlinie H_{L ist} in der Abbildung, genauer deren Relativlage zu einer Soll-Horizontlinie H_{L soll}, kann auf die Fehlausrichtung der Kamera 1 geschlossen werden.
Liegt die Ist-Horizontlinie H_{L ist} nicht parallel zur Längsseite (x-Richtung) der Abbildung bzw. zur Soll-Horizontlinie H_{L soll}, so ist die Kamera 1 gegenüber der Fahrbahnoberfläche verdreht. Liegt die Ist-Horizontlinie H_{L ist} in der oberen Hälfte der Abbildung, dann ist die Kamera 1 zur Fahrbahnoberfläche geneigt und zwar so, dass sie von der Fahrbahnoberfläche wegschaut. Ist sie in der unteren Hälfte abgebildet, dann ist die Kamera ebenfalls zur Fahrbahnoberfläche geneigt und schaut in die Fahrbahnoberfläche.
Verläuft die Ist-Horizontlinie H_{L ist} parallel zur Längsseite und in der Mitte der Abbildung, dann ist die Kamera 1 korrekt ausgerichtet.

Vorteilhaft kann aus der Lage des Fluchtpunktes P_{F} bei korrekt ausgerichteter Kamera 1 der Kamerawinkel φ_{K} bestimmt werden, den die Kameraachse 1.1 horizontal mit der Fahrtrichtung R_{F} einschließt. Hierzu wird aus der Position des Fluchtpunktes P_{F} der Kamerawinkel φ_{K} gemäß der Rechenvorschrift: arccos ((P_{F}/Bildbreite in Pixel - 1/2) cos (1/2 Kameraöffnungswinkel) näherungsweise bestimmt.

Die Justierbewegungen der Kamera 1 können mittels eines am VÜG vorhandenen Verkippmechanismus manuell eingeleitet ausgeführt werden, während der Bediener die Lageänderung der Ist-Horizontlinie H_{L ist} in der Abbildung visuell an einem Display, auf dem die Abbildungen dargestellt werden, verfolgt.
Sie können auch automatisch eingeleitet erfolgen, indem die Lageänderung der Ist-Horizontlinie H_{L ist} rechentechnisch erfasst wird und Abweichungen von der Soll-Horizontlinie H_{L soll} als Regelgröße für motorische Antriebe des Verkippmechanismus genutzt werden.

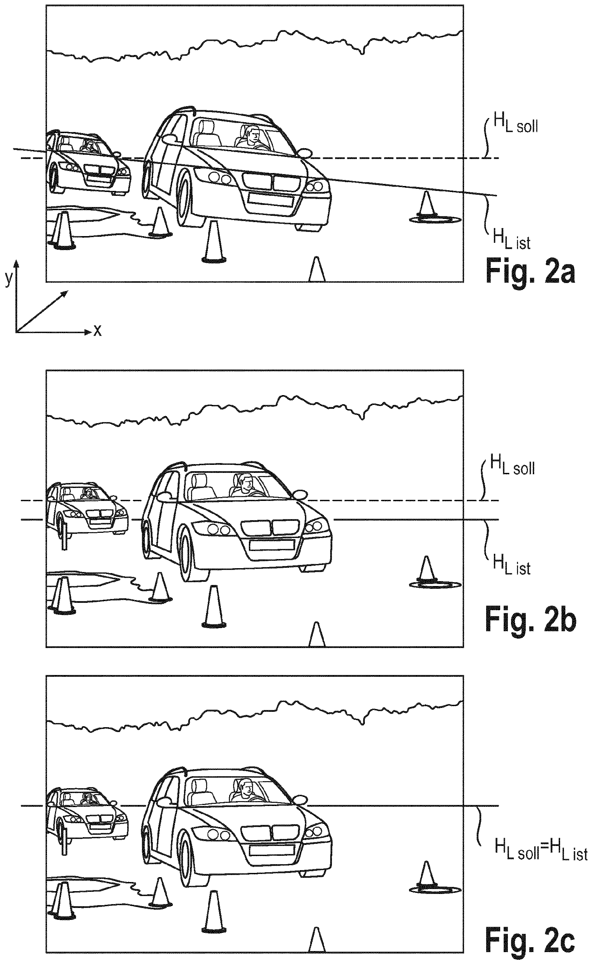

Da der mit der Kamera 1 fest verbundene Messsensor 3 den Justierbewegungen der Kamera 1 folgt, ist auch der Messsensor 3 ausgerichtet, wenn die Kamera 1 ausgerichtet ist und kann in dieser eingenommenen Position fixiert werden. Die Stabilität der Justierung kann manuell oder automatisch z. B. zum Beginn eines jeden neuen Messzyklus geprüft werden. In den Fig. 2a-2c sind jeweils zwei sich überlagernde Abbildungen eines PKWs, die mit einem gleichen Zeitabstand jedoch mit unterschiedlich ausgerichteten Kameras 1 aufgenommen wurden, gezeigt.
Entsprechend Fig. 2a ist die Kamera 1 zur Fahrbahnoberfläche hin geneigt und gegenüber der Fahrbahnoberfläche verkippt, so dass die eingeblendete Ist-Horizontlinie H_{L ist} unterhalb der Soll-Horizontlinie H_{L soll} und zu dieser verkippt verläuft. Indem die Kamera 1 um die Kameraachse 1.1 gedreht wird, wird die Ist-Horizontlinie H_{L ist}, die wie beschrieben aus dabei erstellten Abbildungen ermittelt wird, zur Soll-Horizontlinie H_{L soll} parallel ausgerichtet. Anschließend erstellte Abbildungen entsprechen einer Darstellung in Fig. 2b. Die Ist-Horizontlinie H_{L ist} verläuft jetzt parallel und unterhalb zur Soll-Horizontlinie H_{L soll}.
Die Kameraachse 1.1 und damit die Kamera 1 wird jetzt vertikal verkippt, wobei die Ist-Horizontlinie H_{L ist}, die wie beschrieben aus dabei erstellten Abbildungen ermittelt wird, zur Soll-Horizontlinie H_{L soll} hin verschoben wird, bis sie mit ihr zur Deckung kommt. Anschließend erstellte Abbildungen entsprechen einer Darstellung in Fig. 2c.

Das beschriebene Verfahren kann zur Ausrichtung eines VÜG, aber auch zur Kontrolle der Einhaltung der Ausrichtung durchgeführt werden.

Eine Kontrolle der Ausrichtung kann vorteilhaft auch durch eine visuelle Kontrolle der Lage eines Fahrzeuges in aufeinanderfolgenden Abbildungen beim Durchfahren eines Objektbereiches der Kamera 1 erfolgen.
Gemäß einer ersten Variante wird auf einem Display, auf dem ein Bediener die Durchfahrt beobachten kann, eine Mittellinie parallel zur Längsseite des Displays und damit parallel und mittig zur Empfängermatrix eingeblendet. Während der Durchfahrt eines Fahrzeuges wird jetzt die Ortsveränderung eines Punktes am Fahrzeug beobachtet, der bei Eintritt in den Objektbereich auf dieser Mittellinie abgebildet wird. Bewegt sich dieser Punkt während der gesamten Durchfahrt auf der Mittellinie, so kann daraus geschlossen werden, dass die Kamera 1 korrekt zur Fahrbahn ausgerichtet ist.

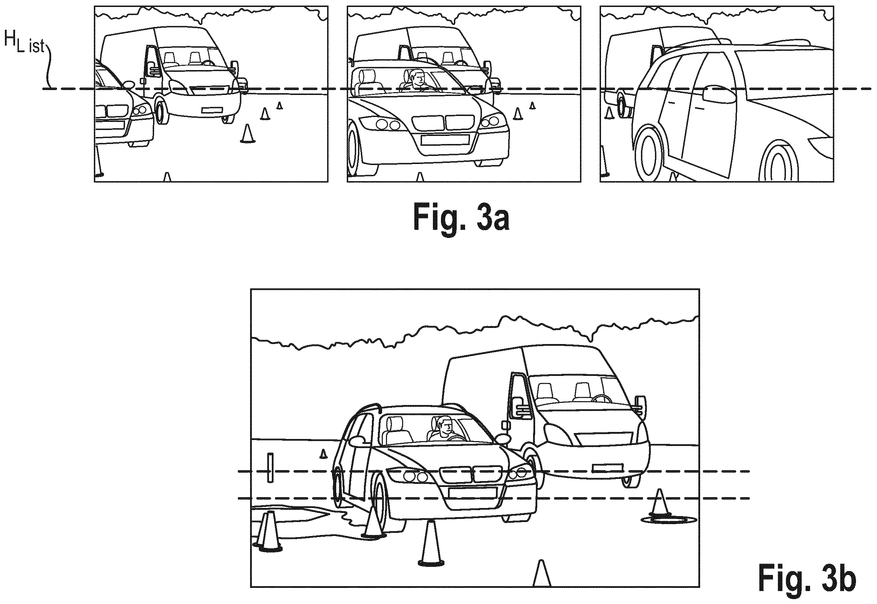

Fig. 3a zeigt drei Abbildungen eines den Objektbereich einer Kamera 1 durchfahrenden Fahrzeugs zu drei aufeinanderfolgenden Zeitpunkten. Als zu beobachtender Punkt, im weitesten Sinne, wurde hier ein Seitenspiegel ausgewählt, der während der Durchfahrt stets auf der Mittellinie abgebildet wurde.

Gemäß einer zweiten Variante wird auf einem Display bei der Durchfahrt eines Fahrzeuges beobachtet, ob Fahrzeugkanten oder Bauteile, die in gleicher Höhe am Fahrzeug verlaufen, parallel zur Mittellinie oder einer hierzu parallel eingeblendeten Linie verlaufen. Werden diese Fahrzeugkanten unter einem Winkel zur Mittellinie abgebildet, so ist das ein Hinweis auf eine Querverkippung.
Fig. 3b zeigt eine Abbildung eines Fahrzeuges, dessen ausgewählte Fahrzeugkanten bzw. gleiche Bauteile in gleicher Höhe am Fahrzeug parallel zur Längskante der Abbildung und damit parallel zur Mittellinie verlaufen.

### Bezugszeichenliste

- 1: Kamera
- 1.1: Kameraachse
- Φ_{K}: Kamerawinkel
- 2: Fahrzeugkennzeichen
- 3: Messsensor

- VÜG: Verkehrsüberwachungsgerät
- H_{L soll}: Soll-Horizontlinie
- H_{L ist}: Ist-Horizontlinie
- P_{F}: Fluchtpunkt von in Fahrtrichtung verlaufenden Geraden
- R_{F}: Fahrtrichtung
- P_{Q}: Fluchtpunkt von in Querrichtung verlaufenden Geraden
- R_{Q}: Querrichtung, senkrecht zur Fahrtrichtung verlaufend

## Patentansprüche

1. Verfahren zur Ausrichtung und Kontrolle der Ausrichtung eines Verkehrsüberwachungsgerätes (VÜG) mit einem Messsensor (3) und einer hierzu fest angeordneten Kamera (1), bei dem das VÜG und damit die Kamera (1) zur Fahrbahn positioniert und mit Augenmaß so ausgerichtet wird, dass die Neigung der Kamera (1) zur Fahrbahnoberfläche möglichst gering ist, anschließend mehrere aufeinanderfolgende Abbildungen eines den Objektbereich der Kamera (1) durchfahrenden Fahrzeuges erstellt werden, aus mindestens zwei Abbildungen die Lage einer Ist-Horizontlinie (H_{L ist}) errechnet wird, diese in nachfolgende Abbildungen projiziert wird, wobei die Kamera (1) solange verkippt wird, bis in den nachfolgenden Abbildungen die projizierte Ist-Horizontlinie (H_{L ist}) entsprechend einer vorgegebenen Soll-Horizontlinie (H_{L soll}) verläuft, womit die Kamera (1) zur Fahrbahnoberfläche ausgerichtet ist,
wobei die Ist-Horizontlinie (H_{L ist}) errechnet wird, indem ein Fluchtpunkt (P_{F}) von in einer Fahrtrichtung (R_{F}) verlaufenden, aus wenigstens zwei Abbildungen gebildeten Geraden sowie ein Fluchtpunkt (P_{Q}) von in einer hierzu senkrechten Querrichtung (R_{Q}) verlaufenden, aus wenigstens einer Abbildung gebildeten Geraden ermittelt und die Fluchtpunkte (P_{F}) und (P_{Q}) miteinander durch eine Gerade verbunden werden, welche die Ist-Horizontlinie (H_{L ist}) präsentiert.

2. Verfahren nach Anspruch 1, **dadurch gekennzeichnet,**
**dass** zur Bildung von in Fahrtrichtung (R_{F}) verlaufenden Geraden ausgewählte Punkte an einem abgebildeten Fahrzeug in wenigstens zwei zeitlich aufeinanderfolgend erstellten Abbildungen miteinander verbunden werden und zur Bildung von in Querrichtung (R_{Q}) verlaufenden Geraden wenigstens zwei ausgewählte Punkte in einer Abbildung, die sich in gleicher Höhe an einem abgebildeten Fahrzeug befinden, miteinander verbunden werden.

3. Verfahren nach einem der Ansprüche 1 - 2, **dadurch gekennzeichnet,**
**dass** das Verkippen der Kamera (1) mittels eines am VÜG vorhandenen Verkippmechanismus manuell eingeleitet erfolgt, während der Bediener die Lageänderung der Ist-Horizontlinie (H_{L ist}) in der Abbildung visuell an einem Display, auf dem die Abbildungen dargestellt werden, verfolgt.

4. Verfahren nach einem der Ansprüche 1 - 2, **dadurch gekennzeichnet,**
**dass** das Verkippen der Kamera (1) mittels eines am VÜG vorhandenen Verkippmechanismus automatisch eingeleitet erfolgt, indem die Lageänderung der Ist-Horizontlinie (H_{L ist}) rechentechnisch erfasst wird und Abweichungen von der Soll-Horizontlinie (H_{L soll}) als Regelgröße für motorische Antriebe des Verkippmechanismus genutzt werden.

5. Verfahren nach einem der vorgenannten Ansprüche, **dadurch gekennzeichnet, dass** die Kamera (1) um ihre Kameraachse (1.1) gedreht wird, bis die Ist-Horizontlinie (H_{L ist}) zur Soll-Horizontlinie (H_{L soll}) parallel ausgerichtet ist, und anschließend die Kameraachse (1.1) und damit die Kamera (1) vertikal verkippt wird, wobei die Ist-Horizontlinie (H_{L ist}) zur Soll-Horizontlinie (H_{L soll}) hin verschoben wird, bis sie mit ihr zur Deckung kommt.

## Claims

1. Method for aligning and controlling the alignment of a traffic monitoring device (VUG) with a measuring sensor (3) and a camera (1) being fixedly arranged with respect to the measuring sensor (3), in which the VÜG and thus the camera (1) are positioned with respect to the roadway and aligned by eye in such a manner that the inclination of the camera (1) towards the roadway surface is as low as possible, subsequently several successive representations of a vehicle driving through the object area of the camera (1) are generated, the position of an actual horizontal line (H_{L ist}) is calculated from at least two representations, the actual horizontal line (H_{L ist}) is projected into subsequent representations, wherein the camera (1) is tilted, until the projected actual horizontal line (H_{L ist}) extends corresponding to a predetermined target horizontal line (H_{L soll} in the subsequent representations, resulting in the alignment of the camera (1) with respect to the roadway surface, wherein the actual horizontal line (H_{L ist}) is calculated by determining a vanishing point (P_{F}) of straight lines extending in a travel direction (R_{F}) and formed by at least two representations and a vanishing point (P_{Q}) of straight lines extending in a transverse direction (R_{Q}) perpendicular to the travel direction (R_{F}) and formed by at least one representation and by connecting the vanishing points (P_{F}) and (P_{Q}) with one another by a straight line presenting the actual horizontal line (H_{L ist}).

2. Method according to claim 1, **characterized in that**, selected points on a represented vehicle are connected with one another in at least two representations which are generated in temporal succession for forming straight lines extending in the travel direction (R_{F}) and at least two selected points are connected with one another in a representation, said points being located at the same level on a represented vehicle, for forming straight lines extending in transverse direction (R_{Q}).

3. Method according to one of claims 1-2, **characterized in that** the tilting of the camera (1) is effected by manual initiation by means of a tilting mechanism present at the VÜG, while the operator visually monitors the position change of the actual horizontal line (H_{L ist}) in the representation on a display on which the representations are shown.

4. Method according to one of claims 1-2, **characterized in that** the tilting of the camera (1) is effected by automatic initiation by means of a tilting mechanism present at the VÜG by determining the position change of the actual horizontal line (H_{L ist}) by calculation and using deviations from the target horizontal line (H_{L soll}) as control variable for motor drives of the tilting mechanism.

5. Method according to one of the preceding claims, **characterized in that** the camera (1) is rotated about its camera axis (1.1), until the actual horizontal line (H_{L ist}) is aligned parallel to the target horizontal line (H_{L soll}), and subsequently the camera axis (1.1) and thus the camera (1) are tilted vertically, wherein the actual horizontal line (H_{L ist}) is shifted towards the target horizontal line (H_{L soll}), until it coincides with the target horizontal line (H_{L soll}).

## Revendications

1. Procédé d'alignement et de contrôle de l'alignement d'un appareil de surveillance du trafic (VÜG) avec un capteur de mesure (3) et une caméra (1) disposée de manière fixe par rapport au capteur de mesure (3), dans lequel le VÜG et donc la caméra (1) sont positionnés par rapport à la chaussée et alignée par vue d'oeil de telle façon que l'inclinaison de la caméra (1) vers la surface de la chaussée est aussi faible que possible, ensuite plusieurs représentations successives d'un véhicule passant par la zone d'objet de la caméra (1) sont générées, la position d'une ligne horizontale réelle (H_{L ist}) est calculée à partir d'au moins deux représentations, la ligne horizontale réelle (H_{L ist}) est projetée dans des représentations suivantes, la caméra (1) étant basculée, jusqu'à ce que la ligne horizontale réelle (H_{L ist}) projetée s'étende correspondant à une ligne horizontale de consigne (H_{L soll}) prédéterminée dans les représentations suivantes, la caméra (1) étant ainsi alignée par rapport à la surface de la chaussée,
la ligne horizontale réelle (H_{L ist}) étant calculée en déterminant un point de fuite (P_{F}) de lignes droites s'étendant dans un sens de la marche (R_{F}) et formées d'au moins deux représentations et un point de fuite (P_{Q}) de lignes droites s'étendant dans un sens transversal (R_{Q}) perpendiculairement au sens de la marche (R_{F}) et formées d'au moins une représentation et les points de fuite (P_{F}) et (P_{Q}) étant reliés l'un à l'autre par une ligne droite présentant la ligne horizontale réelle (H_{L ist}).

2. Procédé selon la revendication 1, **caractérisé en ce que** des points sélectionnés sur un véhicule représenté sont reliés les uns aux autres dans au moins deux représentations générées en succession temporelle pour former des lignes droites s'étendant dans le sens de la marche (R_{F}) et au moins deux points sélectionnés sont reliés les uns aux autres dans une représentation, lesdits points étant situés au même niveau sur un véhicule représenté, pour former des lignes droites s'étendant dans le sens transversal (R_{Q}).

3. Procédé selon une des revendications 1-2, **caractérisé en ce que** le basculement de la caméra (1) est effectué par lancement manuel au moyen d'un mécanisme de basculage présent au VÜG, pendant que l'opérateur surveille visuellement le changement de position de la ligne horizontale réelle (H_{L ist}) dans la représentation sur un écran sur lequel les représentations sont montrées.

4. Procédé selon une des revendications 1-2, **caractérisé en ce que** le basculement de la caméra (1) est effectué par lancement automatique au moyen d'un mécanisme de basculage présent au VÜG en déterminant le changement de position de la ligne horizontale réelle (H_{L ist}) par calcul et en utilisant des déviations de la ligne horizontale de consigne (H_{L soll}) en tant que variable réglée pour des entraînements motorisés du mécanisme de basculage.

5. Procédé selon une des revendications précédentes, **caractérisé en ce que** la caméra (1) est tournée autour de son axe de camera (1.1), jusqu'à ce que la ligne horizontale réelle (H_{L ist}) est alignée parallèlement à la ligne horizontale de consigne (H_{L soll}), et ensuite l'axe de camera (1.1) et donc la caméra (1) sont basculés verticalement, la ligne horizontale réelle (H_{L ist}) étant déplacée vers la ligne horizontale de consigne (H_{L soll}), jusqu'à ce qu'elle coïncide avec la ligne horizontale de consigne (H_{L soll}).
